# EUROPÄISCHE PATENTSCHRIFT

(11) **EP 1 240 962 B1**
(45) Veröffentlichungstag und Bekanntmachung des Hinweises auf die Patenterteilung: **09.11.2005**
(21) Anmeldenummer: 02002339.6
(22) Anmeldetag: 31.01.2002
(51) Int. Cl.: B23B 27/16, B23C 5/22

(54) **Werkzeug zur spanabtragenden Bearbeitung von Werkstücken**
Tool for chip removal on workpieces
Outil à enlèvement de copeaux de pièces

(30) Priorität: 16.03.2001 DE 10113707
(43) Veröffentlichungstag der Anmeldung: 18.09.2002
(73) Patentinhaber: MAPAL Fabrik für Präzisionswerkzeuge Dr. Kress KG, D-73431 Aalen (DE)
(72) Erfinder:
(74) Vertreter: Gleiss, Alf-Olav

(56) Entgegenhaltungen:
- DE-A- 19 854 873
- FR-A- 2 357 322

## Beschreibung

Die Erfindung betrifft ein Werkzeug zur spanabtragenden Bearbeitung von hochfesten Materialien gemäß Oberbegriff des Anspruchs 1. Im Folgenden werden mit der Bezeichnung "hochfeste Materialien" nicht nur Materialien angesprochen, die von Natur aus eine hohe Festigkeit aufweisen, sondern auch solche, die durch besondere Behandlungsverfahren eine hohe Festigkeit beziehungsweise Härte aufweisen, insbesondere gehärtete Werkstoffe wie gehärtete Stähle.

Werkzeuge der hier angesprochenen Art sind bekannt (siehe z.B. DE 198 54 873). Sie dienen dazu, Werkstückoberflächen, insbesondere Bohrungsoberflächen in Werkstücken zu bearbeiten, die aus hochfesten Materialien bestehen. Zum Abtragen der Späne wird das Werkstück, beziehungsweise die zu bearbeitende Oberfläche, an einer Messerplatte des Werkzeugs vorbeigeführt, so dass die Messerplatte von der Werkstückoberfläche Späne abträgt. Bei der Bearbeitung von Bohrungsoberflächen wird das Werkstück in Rotation versetzt und das feststehende auch als bezeichnete Werkzeug in die Bohrung eingeführt. Es hat sich gezeigt, dass bei der Bearbeitung von hochfesten Materialien häufig Schwingungen auftreten, die zum Rattern führen. Dadurch weist die bearbeitete Oberfläche des Werkstücks keine besonders gute Oberflächenqualität auf. Das heißt, es sind Rinnen und Riffeln festzustellen, die in vielen Fällen nicht hinnehmbar sind.

Es ist daher Aufgabe der Erfindung, ein Werkzeug zu schaffen, das diese Nachteile nicht aufweist.

Zur Lösung dieser Aufgabe wird ein Werkzeug der eingangs genannten Art vorgeschlagen, das die in Anspruch 1 genannten Merkmale aufweist. Es zeichnet sich dadurch aus, dass die Messerplatte mit Hilfe einer Spannpratze am Werkzeug festgespannt wird, die in eine auf der Messerbrust vorgesehene Spannnut eingreift. Die Spannpratze drückt die Messerplatte fest gegen das Werkzeug beziehungsweise dessen Grundkörper. Dadurch, dass die Messerplatte mit einer Spannnut versehen ist, wird sichergestellt, dass diese in einer vorgegebenen Lage am Werkzeug fixiert werden kann, die eine schwingungsfreie Bearbeitung des Werkstücks ermöglicht.

Das Werkzeug zeichnet sich weiterhin dadurch aus, dass dessen Grundkörper einen als Widerlager dienenden Vorsprung aufweist, der über die Umfangsfläche des Werkzeugs ragt und sich Kreisbogenförmig über diese erstreckt. Der Vorsprung ist so ausgebildet, dass er die Messerplatte praktisch über deren gesamte Rückseite abstützt, also auf der Seite, die der Spannpratze abgewandt ist. Dies führt dazu, dass die Messerplatte besonders sicher am Werkzeug gehalten wird und sich Schwingungen vermeiden lassen.

Bevorzugt wird ein Ausführungsbeispiel des Werkzeugs, das sich dadurch auszeichnet, dass es einstückig ausgebildet ist. Dies führt zu einer besonderen Stabilität des Werkzeugs und damit zu einem schwingungsfreien Einsatz. Insbesondere dadurch lässt sich beim spanabtragenden Bearbeiten von Werkstücken ein Rattern sicher vermeiden.

Weitere Ausgestaltungen ergeben sich aus den übrigen Unteransprüchen.

Die Erfindung wird im Folgenden anhand der Zeichnung näher erläutert. Es zeigen:
- Figur 1: eine Seitenansicht einer Ausführungsform des Werkzeugs;
- Figur 2: eine Draufsicht auf das Werkzeug gemäß Figur 1 in verkleinertem Maßstab;
- Figur 3: eine Vorderansicht des Werkzeugs und
- Figur 4: eine Detailvergrößerung der Messerplatte.

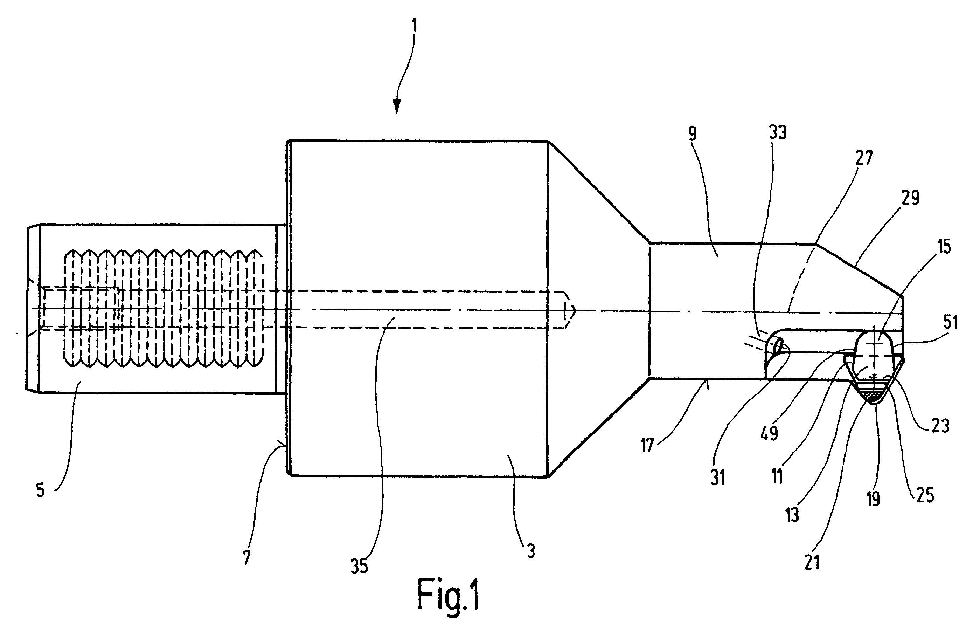

Das in Figur 1 dargestellte Werkzeug 1 umfasst einen Grundkörper 3 mit einem Schaft 5, der der Befestigung des Werkzeugs 1 an einer Werkzeugaufnahme einer Werkzeugmaschine oder an einem Adapter, Zwischenstück oder dergleichen dient. Der Schaft 5 weist einen kleineren Durchmesser als der sich anschließende Bereich des Grundkörpers 3 auf, so dass eine den Schaft 5 umgebende Planfläche 7 gebildet wird, die vorzugsweise ringförmig ist und dazu dient, dass im eingespannten Zustand das Werkzeug 1 sicher an der Halterung, dem Zwischenstück, Adapter oder dergleichen anliegt.

Auf der dem Schaft gegenüberliegenden Seite ist ein Bereich 9 des Grundkörpers vorgesehen, dessen Außendurchmesser geringer ist als der zwischen dem Bereich 9 und dem Schaft 5 liegende Teil des Werkzeugs 1. Im Bereich 9 ist eine -hier, in Draufsicht gesehen, dreieckförmige- Messerplatte 11 vorgesehen, die mit Hilfe einer Spannpratze 13 am Grundkörper 3 des Werkzeugs 1 festgespannt wird. Durch ein Kreuz 15 ist angedeutet, dass die Spannpratze 13 mittels einer Spannschraube am Grundkörper 3 befestigt wird. Die Messerplatte 11 ragt etwa mit einem Drittel über die Umfangsfläche 17 des Bereichs 9 des Werkzeugs 1 heraus und weist im am weitesten vorstehenden Bereich eine Schneide 19 auf. Durch eine Straffur ist hier angedeutet, dass im Bereich der Schneide 19 ein Einsatz 21 vorgesehen sein kann, der sich durch eine besondere Härte und Verschleißfestigkeit auszeichnet. Dieser kann aus Keramik, Diamant oder aus CBN bestehen.

Die Messerplatte 11 ist im Bereich der Schneide 19 abgerundet. Es liegt hier ein Krümmungsradius von 2,2 mm bis 2,7 mm vor. Besonders bewährt hat sich ein Krümmungsradius von circa 2,5 mm, der sich dadurch auszeichnet, dass die Messerplatte sehr stabil und wenig bruchanfällig ist und insbesondere wenig Schwingungen induziert, wenn ein Werkstück aus einem hochfesten Material bearbeitet wird. Durch die Abrundung im Bereich der Schneide 19 wird außerdem sichergestellt, dass bei der Bearbeitung von unterbrochenen Bohrungsoberflächen die Schneide 19 nicht beschädigt wird.

Der dem Kreuz 15 abgewandte Bereich der Spannpratze 13, der auch als Spannlippe 23 bezeichnet wird, liegt auf der dem Betrachter zugewandten Vorderseite der Messerplatte 11 auf, die im Berührungsbereich mit der Spannlippe 23 mit einer vorzugsweise durchgehenden Spannnut 25 versehen ist. Die Spannnut 25 dient dazu, die Messerplatte 11 formschlüssig zu halten. Sie kann auf einfache Weise durch einen Schleifvorgang in die Messerplatte 11 eingebracht werden.

Die Spannnut 25 verläuft -in Draufsicht gesehen- im Wesentlichen parallel zur Mittelachse 27 des Werkzeugs 1 und ist möglichst nahe an der Schneide 19 angeordnet, um die Gefahr von Vibrationen zu minimieren. Durch das Zusammenspiel zwischen Spannnut 25 und Spannlippe 23 ist gewährleistet, dass die Messerplatte 11 verdrehsicher am Grundkörper 3 des Werkzeugs 1 gehalten wird. Dadurch werden einmal vorgegebene Schneideigenschaften sicher beibehalten und ein Rattern beziehungsweise Schwingungen vermieden.

Der Bereich 9 des Grundkörpers 3 ist auf der der Messerplatte 11 gegenüberliegenden Seite mit einer Anschrägung 29 versehen, die das Einführen des Werkzeugs 1 in eine zu bearbeitende Bohrung erleichtert.

In Figur 1 ist noch die Mündung 31 eines in den Grundkörper 3 eingebrachten Kanals 33 angedeutet, die, was hier nicht dargestellt ist, letztlich in einer Bohrung 35 mündet, die hier konzentrisch zur Mittelachse 27 im Grundkörper 3 verläuft. In diese Bohrung wird auf geeignete Weise unter Druck stehende Luft eingespeist, die im Betrieb des Werkzeugs 1 aus der Mündung 31 austritt und Späne aus dem Bearbeitungsbereich der Messerplatte 11 austrägt.

Aus der Darstellung gemäß Figur 1 wird deutlich, dass die Breite der Spannpratze 13 im Bereich der Spannnut 25 so gewählt ist, dass die Spannlippe 23 praktisch über die gesamte Breite der Messerplatte 11 auf deren Vorderseite aufliegt. Damit werden eine optimale Lagefixierung der Messerplatte 11 am Grundkörper 3 des Werkzeugs 1 und eine hohe Steifigkeit der Spannpratze 13 sichergestellt. Dabei wird durch eine entsprechende Ausgestaltung der Spannlippe 23 auch gewährleistet, dass die Spannpratze 13 die Messerplatte 11 nicht seitlich überragt. Die Breite der Spannlippe 23 ist hier so gewählt, dass diese innerhalb des Inkreises der Messerplatte 11 liegt.

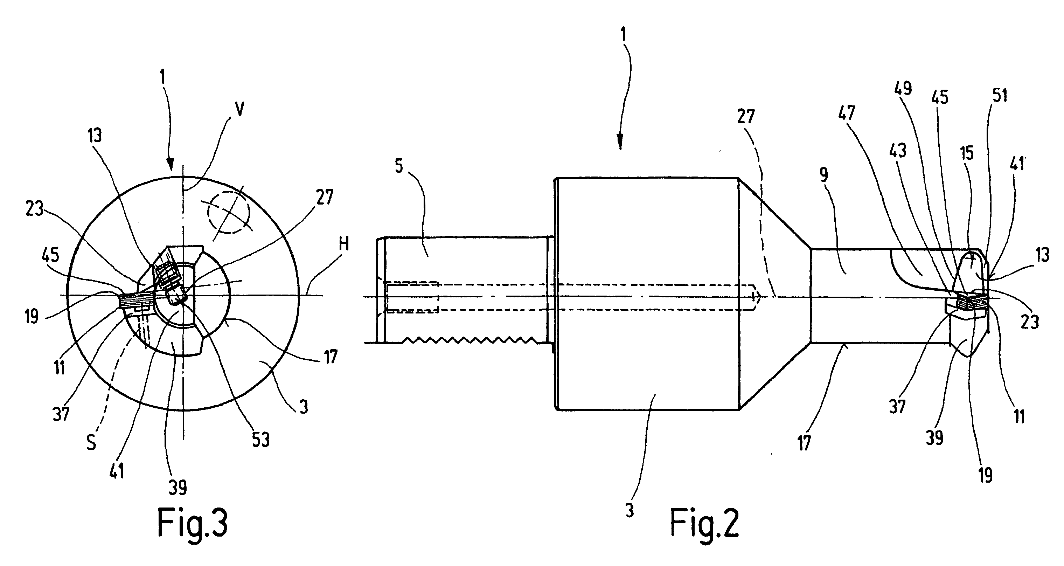

Figur 2 zeigt das in Figur 1 dargestellte Werkzeug 1 in Draufsicht, so dass der Betrachter hier von oben auf die Messerplatte 11 schaut. Teile, die bereits anhand von Figur 1 erläutert wurden, sind mit gleichen Bezugsziffern versehen, so dass auf die vorangegangene Erläuterung verwiesen werden kann. Figur 2 lässt erkennen, dass zwischen dem Grundkörper 3 und der Messerplatte 11 eine Zwischenlage 37 vorgesehen sein kann, die ihrerseits auf geeignete Weise am Grundkörper 3 des Werkzeugs 1 befestigt ist, beispielsweise durch eine Schraube, die die Zwischenlage 37 durchdringt und in den Grundkörper 3 des Werkzeugs 1 eingreift. Die Kontur der Zwischenlage 37 ist vorzugsweise an die der Messerplatte 11 angepasst. Es wird daher hier eine im Wesentlichen dreieckförmige Zwischenlage 37 gewählt, deren Größe praktisch der der Messerplatte 11 entspricht, so dass diese sich, bis auf den Bereich der Schneide 19, vollflächig an der Zwischenlage 37 abstützen kann. Die Zwischenlage 37 wird auf ihrer der Messerplatte 11 abgewandten Seite von einem über die Umfangsfläche 17 vorspringenden Widerlager 39 abgestützt, das sicherstellt, dass die bei der Bearbeitung des Werkstücks über die Schneide 19 in die Messerplatte 11 eingeleiteten Kräfte abgefangen und in den Grundkörper 3 des Werkzeugs 1 eingeleitet werden.

Die Draufsicht gemäß Figur 2 lässt erkennen, dass die Messerplatte 11 nicht über ihre gesamte Breite aus der Umfangsfläche 17 des Werkzeugs 1 ragt. Es ist erkennbar, dass auf der der Stirnseite 41 des Werkzeugs 1 abgewandten Seite der Messerplatte 11 der Grundkörper 3 die Messerplatte 11 in einem Abschnitt 43 überragt.

Die Draufsicht gemäß Figur 2 zeigt auch, dass die Vorderseite 45 der Messerplatte 11 nicht parallel zur Mittelachse 27 verläuft, sondern mit dieser einen spitzen Winkel einschließt, der sich von der Stirnseite 41 in Richtung zum Schaft 5 öffnet und vorzugsweise in einem Bereich von 4° bis 8°, insbesondere von circa 6° liegt. Durch diesen spitzen Winkel wird bei der Bearbeitung eines Werkstücks ein derartiger Spanfluss gewährleistet, dass Vibrationen und Schwingungen auf ein Minimum reduziert werden. Figur 2 lässt noch erkennen, dass die Schneide 19 der Messerplatte 11 auf einer Ebene liegt, die die Mittelachse 27 schneidet.

Oberhalb der Mittelachse 27 ist im Bereich der Messerplatte 11 und nach links anschließend eine Ausnehmung im Grundkörper 3 des Werkzeugs 1 vorgesehen, die als Spanraum 47 dient. In diesen Bereich laufen die vom Werkstück abgetragenen Späne. Vorzugsweise ist die Spannpratze 13 so versenkt im Grundkörper 3 des Werkzeugs 1 angeordnet, dass sie nicht in den Spanraum 47 ragt und den Spanablauf negativ beeinträchtigt.

Aus den Figuren 1 und 2 ist ersichtlich, dass die Spannpratze 13 prismatisch ausgebildet ist. Sie weist also, ausgehend von der durch das Kreuz 15 angedeuteten Spannschraube, zwei unter einem spitzen Winkel verlaufende Seitenflächen 49 und 51 auf. Diese dienen dazu, die Spannpratze 13 im festgezogenen Zustand verdrehsicher im Grundkörper 3 des Werkzeugs 1 zu verankern und damit eine definierte Ausrichtung der formschlüssig gehaltenen Messerplatte 11 zu gewährleisten.

Bei der Draufsicht gemäß Figur 3 auf die Stirnfläche 41 des Werkzeugs 1 sind Teile des Werkzeugs weggebrochen. Auf diese Weise ist die Spannpratze 13 gut erkennbar, die mit ihrer Spannlippe 23 auf der Vorderseite 45 der Messerplatte 11 aufliegt.

In Figur 3 ist deutlich eine Spannschraube 53 erkennbar, die zwei Gewindeabschnitte aufweist. Ein erster Gewindeabschnitt greift in die Spannpratze 13 und ein zweiter in den Grundkörper 3 des Werkzeugs 1 ein. Vorzugsweise sind die Gewindeabschnitte mit gegenläufigen Gewinden ausgestattet, was grundsätzlich bekannt ist. Die Spannschraube 53 verläuft gegenüber einer gedachten senkrechten Linie V unter einem spitzen Winkel, um die Messerplatte 11 sicher im Grundköper 3 zu fixieren. Diese ist, wie aus Figur 3 ersichtlich, so angeordnet, dass ihre Schneide 19 eine gedachte horizontale Linie H berührt, die, wie die vertikale Linie V, die Mittelachse 27 schneidet. Die Draufsicht zeigt, dass die Messerplatte 11 nicht vollständig in einer Ebene liegt, die mit der horizontalen Linie H zusammenfällt. Sie ist vielmehr unter einem spitzen Winkel von 4° bis 8°, vorzugsweise von circa 6° so geneigt, dass bis auf die Schneide 19 die Vorderseite 45 oberhalb der horizontalen Linie H angeordnet ist. Auch diese Anordnung dient dazu, eine optimale Spanführung bei der Bearbeitung von Werkstücken zu gewährleisten und ein Rattern beziehungsweise Schwingungen zu vermeiden.

Aus Figur 3 ist ersichtlich, dass das Widerlager 39 durch einen über die Umfangsfläche 17 ragenden Vorsprung gebildet wird, der sich kreisbogenförmig über die Umfangsfläche 17 erstreckt und zwar über einen Bereich von circa 90°. Das Widerlager 39 ist also besonders widerstandsfähig und so ausgebildet, dass die bei der Bearbeitung eines Werkstücks auftretenden Kräfte sicher und schwingungsarm in den Grundkörper 3 abgeleitet werden können.

Gestrichelt ist in Figur 3 angedeutet, dass die Zwischenlage 37 mittels einer Schraube S am Grundkörper 3 des Werkzeugs 1 befestigt ist, nämlich im Bereich des Widerlagers 39. Von der Zwischenlage 37 aufgenommene Kräfte werden also über das Widerlager 39 sicher und schwingungsarm in den Grundkörper 3 des Werkzeugs 1 eingeleitet.

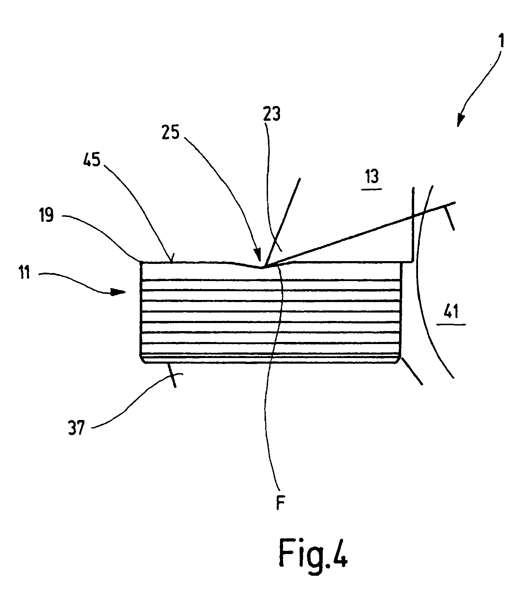

Bei der verkleinerten Darstellung gemäß Figur 3 ist die Spannnut 25 nicht ohne weiteres erkennbar, daher wird hier auf die in Figur 4 wiedergegebene Detailvergrößerung verwiesen, die die Messerplatte 11, wie in Figur 3, in Vorderansicht zeigt. Wesentlich ist, dass die Spannnut 25 eine gegenüber der Vorderseite 45 der Messerplatte 11 geneigte Flanke F aufweist, die bei der Darstellung gemäß Figur 4 von links nach rechts ansteigt und mit der Vorderseite 45 einen Winkel von circa 6° bis 12°, vorzugsweise von circa 10° einschließt. Durch diese Flanke F werden die auf die Vorderseite 45 der Messerplatte 11 wirkenden Kräfte der Spannpratze 13 so aufgeteilt, dass eine erste Teilkraft die Messerplatte 11 gegen die Zwischenlage 37 und gegen das Widerlager 39 anpresst, so dass die Messerplatte 11 im Grundkörper 3 des Werkzeugs 1 sicheren Halt findet. Eine zweite Teilkraft wirkt in Richtung der Mittelachse 27 des Werkzeugs 1, so dass die Messerplatte 11 in einer vorgegebenen Lage drehsicher fixiert werden kann.

Aus der vergrößerten Darstellung der Messerplatte 11 wird deutlich, dass diese durch die Spannnut 25 praktisch nicht geschwächt wird. Da die Messerplatte 11 außerdem keine Durchbrechung für eine sonst übliche Spannschraube aufweist, ist die sehr stabil, was ebenfalls zu einer schwingungsarmen Bearbeitung von Werkstücken führt und sie Standzeit wesentlich erhöht.

Es sei hier ausdrücklich darauf hingewiesen, dass der Grundkörper 3 des Werkzeugs 1 einstückig ausgebildet ist. Das heißt also, der Schaft 5 geht über den mittleren Abschnitt des Werkzeugs 1, der sich durch einen größeren Außendurchmesser auszeichnet, in den durchmesserkleineren Bereich 9 über, in dem die Messerplatte 11 angebracht ist. Durch die einstückige Ausbildung des Werkzeugs 1 wird sichergestellt, dass bei der Bearbeitung eines Werkstücks mittel der Messerplatte 11 besonders schwingungsarm in die Halterung des Werkzeugs 1 eingeleitet werden können, so dass ein Rattern und Schwingen während der Bearbeitung des Werkzeugs mit hoher Sicherheit vermieden werden kann. Die Messerplatte 11 ist deshalb sehr stabil und bei der Bearbeitung von Werkstücken sehr schwingungsarm, weil sie mittels einer Spannpratze gehalten wird und nicht mittels einer die Messerplatte durchdringenden Schraube.

Das Werkzeug 1, das anhand der Figuren 1 bis 4 erläutert wurde, zeichnet sich also durch eine spezielle Ausgestaltung aus, die es ermöglicht, Werkstücke aus hochfesten Materialien mit Hilfe einer Messerplatte 11 zu bearbeiten, ohne dass dabei Schwingungen auftreten, die zu einer Beeinträchtigung der bearbeiteten Werkstückoberfläche und zu einer nachhaltigen Verkürzung der Standzeit führen würden. Das Zusammenspiel der diversen Maßnahmen, nämlich die einstückige Ausbildung des Werkzeugs 1, die sichere Lagerung der Messerplatte 11 über das Widerlager 39, gegebenenfalls durch eine Zwischenlage 37, und die Tatsache, dass das Widerlager 39 über die Umfangsfläche 17 des Grundkörpers 3 ragt, schließlich die verdrehsichere Halterung der Messerplatte 11 am Grundkörper 3 des Werkzeugs 1, ergeben hervorragende Bearbeitungsergebnisse auch und insbesondere dann, wenn das Werkstück aus hochfesten Materialien besteht. Um die Materialeigenschaften des bei der Bearbeitung sehr heiß werdenden Werkzeugs 1 und der Messerplatte 11 sowie des bearbeiteten Werkstücks nicht nachteilig zu beeinträchtigen, werden entstehende Späne nicht mittels eines Kühl- und/oder Schmiermittels von der Bearbeitungsstelle abgeführt sondern mittels unter Überdruck stehender Luft, die aus der Mündung 31 auf den Bearbeitungsbereich geleitet wird.

## Patentansprüche

1. Werkzeug zur spanabtragenden Bearbeitung von Werkstücken aus hochfestem Material, mit einem Grundkörper (3) mit einer Umfangsfläche (17) und einer von einer Spannpratze gehaltenen Messerplatte, die eine auf der Vorderseite (45) vorgesehene Spannnut (25) aufweist, in die die Spannpratze (13) eingreift und -in Draufsicht gesehen- im Wesentlichen dreieckig ausgebildet ist, **dadurch gekennzeichnet, dass** die Spannnut (25) sich praktisch über die gesamte Breite der Messerplatte (11) erstreckt, und dass der Grundkörper (3) des Werkzeugs (1) im Bereich der Messerplatte (11) einen als Widerlager (39) dienenden, über die Umfangsfläche (17) ragenden Vorsprung aufweist, der sich kreisbogenförmig über die Umfangsfläche (17) des Grundkörpers (3) erstreckt.

2. Werkzeug nach Anspruch 1, **dadurch gekennzeichnet, dass** die Spannnut (25) im Querschnitt eine Flanke aufweiset, die mit der Vorderseite (45) der Messerplatte (11) einen Winkel von circa 8° bis circa 12°, vorzugsweise von circa 10° einschließt.

3. Werkzeug nach einem der vorhergehenden Ansprüche, **dadurch gekennzeichnet, dass** die Spannpratze (13) eine Spannlippe (23) aufweist, deren Breite etwa der Länge der Spannnut (25) entspricht und vorzugsweise innerhalb des Inkreises der Messerplatte (11) liegt.

4. Werkzeug nach einem der vorhergehenden Ansprüche, **dadurch gekennzeichnet, dass** der Grundkörper (3) des Werkzeugs (1) einstückig ausgebildet ist.

5. Werkzeug nach einem der vorhergehenden Ansprüche, **dadurch gekennzeichnet, dass** die Spannpratze (13) prismatisch ausgebildet ist.

## Claims

1. Tool for chip-removing machining of workpieces of high-strength material, with a base body (3) having a circumferential surface (17), and with a blade plate held by a clamping lug comprising a groove (25) provided on the front side (45) in which the clamping lug (13) engages and -viewed from above- is configured essentially as a triangle, **characterised in that** the groove (25) extends practically over the entire width of the blade plate (11), and that the base body (3) of the tool (1) in the area of the blade plate (11) has a portion projecting over the circumferential surface (17) which serves as a support (39) and which extends as an arc above the circumferential surface (17) of the base body (3).

2. Tool according to claim 1, **characterised in that** the groove (25), in cross section, has an edge which encloses an angle of approximately 8° to approximately 12°, preferably approximately 10°, with the front side (45) of the blade plate (11).

3. Tool according to any one of the preceding claims, **characterised in that** the clamping lug (13) has a damping lip (23) the width of which corresponds to about the length of the groove (25) and preferably lies within the incircle of the blade plate (11).

4. Tool according to any one of the preceding claims, **characterised in that** the base body (3) of the tool (1) is configured as one piece.

5. Tool according to any one of the preceding claims, **characterised in that** the clamping lug (13) is configured as a prism.

## Revendications

1. Outil à l'usinage par enlèvement de copeaux de pièces en matière à haute résistance, comprenant un corps de base (3) avec une surface circonférentielle (17) et une plaque de lames maintenue par une griffe de serrage munie d'une rainure de serrage (25) qui est pourvue sur sa face avant (45) dans laquelle vient s'engager la griffe de serrage (13) et qui -en vue de dessus- se présente pour l'essentiel sous la forme d'un triangle, **caractérisé en ce que** la rainure de serrage (25) s'étend pratiquement sur toute la largeur de la plaque de lames (11), et que le corps de base (3) de l'outil (1) comporte dans la zone de la plaque de lames (11) une partie faisant saillie sur la surface circonférentielle (17) qui sert de support (39) et qui s'étend comme un arc au-dessus de la surface circonférentielle (17) du corps de base (3).

2. Outil selon la revendication 1, **caractérisé en ce que** la rainure de serrage (25) présente, en coupe transversale, un flanc qui forme un angle d'environ 8° à environ 12°, préférablement d'environ 10°, avec la face avant (45) de la plaque de lames (11).

3. Outil selon l'une des revendications précédentes, **caractérisé en ce que** la griffe de serrage (13) comporte une lèvre de serrage (23) dont la largeur correspond approximativement à la largeur de la rainure de serrage (25) et qui est préférablement placée dans le cercle inscrit de la plaque de lames (11).

4. Outil selon l'une des revendications précédentes, **caractérisé en ce que** le corps de base (3) de l'outil (1) est formé d'une pièce.

5. Outil selon l'une des revendications précédentes, **caractérisé en ce que** la griffe de serrage (13) se présente sous la forme d'un prisme.
